# EUROPEAN PATENT APPLICATION

(11) **EP 1 008 375 A1**
(43) Date of publication of application: **14.06.2000**
(21) Application number: 99204170.7
(22) Date of filing: 07.12.1999
(51) Int. Cl.: B01D 29/15, B01D 29/96, B01D 35/157

(54) **Disposable fuel filter element and lid assembly**

(30) Priority: 11.12.1998 US 111877 P
(71) Applicant: Baldwin Filters, Inc., Kearney, Nebraska 68848-6010 (US)
(72) Inventor: Biere, David A., Keraney, Nebraska 68847 (US); Brown, Gene W., Kearney, Nebraska 68847 (US); Krull, Timothy L., Kearney, Nebraska 68847 (US)
(74) Representative: Meyers, Ernest

(57) **Abstract**

The present invention provides a replaceable filter element (22) and removably attached lid (24) for a fuel filter of the type having a substantially cylindrical housing (34) with an open end and an end with a standpipe (38) extending from the closed end of the housing. A valve is situated within the upper end of the standpipe (38) which can be downwardly depressed into the standpipe (38) to open the valve when the lid is attached to the filter housing. The lid (24) includes a projection (44) which extends into the standpipe (38), as well as a mechanism by which the lid (24) can be attached to the replaceable filter element (22) such that the replaceable filter element (22) is removed every time the lid (24) is removed. Moreover, the replaceable filter element (22) and lid (24) can be discarded every time the filter element (22) is discarded.

## Description

The present invention generally relates to fuel filters and more particularly relates to replaceable filter elements for fuel filters.

Fuel filters for internal combustion engines, such as those used on motor vehicles, commonly include a housing to which the fuel to be filtered is directed, as well as a replaceable filter element which resides within the filter housing. The replaceable filter element provides the medium through which the fuel is passed to screen or filter contaminants from the fuel.

A variety of fuel filter designs are currently known, with U.S. Patent No. 5,770,065 disclosing a substantially cylindrical housing having a closed end and an open end with a removable lid being threadably attached to the open end of the cylindrical housing. A standpipe extends from the closed end of the housing to the open end, and includes an operable fuel valve in the upper end of the standpipe. An annular shaped replaceable filter element having a pleated filter ring and a pair of end caps is disposed around the standpipe. A projection is affixed to the upper end cap of the replaceable filter element which is adapted to enter the standpipe and actuate the valve when the replaceable filter element and removable lid are in operable position. The end cap of the replaceable filter element includes a pair of deformable fingers which cooperate with apertures provided in the removable lid to removably attach the filter element to the lid such that when the lid is removed, the replaceable filter element is removed as well to thereby allow the replaceable filter element to be thrown away, and for a clean filter element to be reattached to the lid for subsequent use.

In addition, U.S. Patent No. 5,049,269 sets forth a fuel filter design analogous to the '065 patent, except for provision of the valve actuation projection on the lid of the fuel filter. More specifically, the '269 discloses the same basic filtering principles as the '065, but for the positioning of the valve actuating projection on the filter lid. This is in opposition to the '065 patent which, as indicated above, provides its valve actuation projection on the end cap of the replaceable filter element, not on the fuel filter housing lid.

While such a filter arrangement is workable, it is not without drawbacks. For example, with regard to the '065 patent, when the replaceable filter element is full and needs to be replaced, the person servicing the engine must remove the lid and filter element, and inwardly depress the plastic fingers on the end cap of the filter element to release the filter element for disposal purposes. In so doing, the hands of the operator often come in contact with the filter element itself which is normally quite soiled, resulting in a mess. Moreover, the retaining fingers on the end cap themselves may become soiled, again resulting in a mess on the hands of the operator. Given the location and structure of the fingers, they are also susceptible to breakage, thereby making filter element removal difficult.

In addition, a loose sealing gasket is typically provided with the service element, intended to be installed between the outer periphery of the removable lid and outer circumference of the open end of the fuel housing. In keeping with best practice within the industry, it is the intention that this loose gasket be replaced at each service interval, however, there is no guarantee that this will happen. First, because the used gasket is soiled with diesel fuel and other contaminants, the operator may attempt to reuse the gasket simply in order to lessen the mess associated with the change. Another reason that the gasket might not be replaced is that the supplied gasket may have a beveled edge on it, where proper orientation of this gasket is critical but unfortunately, not obvious. Improper orientation may lead to fuel leaks and overall poorer performing engines. By leaving the used gasket in place, the operator appears to resolve the problem of improper orientation, but in doing so, can create the very leaks they were trying to avoid, since it is well known that used gaskets typically do not seal with the same integrity as a virgin gasket. Finally, during subsequent servicing of the filtering element, this loose gasket can fall into the interior of the filter housing and become lodged around delicate internal components, making extraction difficult and perhaps even damaging to said internal components.

Furthermore, since the lid is reused and only the replaceable filter element is discarded, the aforementioned lid, which is typically made of plastic, is prone to fatigue and premature failure. The gradual weakening of the lid can be exacerbated by the various fuel additives commonly found in diesel fuel, particularly those marketed as winter driving aids. And in fact, the very act of applying sufficient loosening torque to the lid, through the small projecting tabs, may cause it to break during servicing. In addition, it is also possible that the lid get misplaced, lost, or otherwise damaged while removed from the vehicle, and it has been found that such lids are often difficult and expensive to replace as they are not commonly maintained in inventory. This necessarily equates to downtime for the internal combustion engine, of which the fuel filter is a part, until such a replacement lid is obtained.

The engine can also be subjected to downtime, and the motorist can be stranded as a result, if the replacement filter element becomes plugged without a replacement element being readily available. In other words, since such replacement filter elements include the actuation projection to operate the fuel valve within the standpipe, with such a design the fuel filter and thus the engine is inoperable unless the replacement filter element is operable as well. The engine cannot operate with the plugged replacement filter element simply removed and the replacement lid attached to the filter housing because no mechanism is provided to open the fuel valve within the standpipe.

In addition to these difficulties, it would be beneficial if the central area of the replaceable filter element end cap were to be opened to allow for various sensors, heaters, vents, valves, etc., to be inserted through the removable lid of the fuel filter to the center portion of the filter element. It would also be beneficial if the entire fuel filter element and lid assembly could be manufactured quickly and at a minimum of expense.

It is therefore an objective of the present invention to provide a fuel filter element and lid assembly which substantially eliminates contact between an operator and a soiled filter element when replacing the filter element and which avoids downtime for an internal combustion engine using such a fuel filter due to the removable lid of the fuel filter being lost or broken.

It is another objective of the present invention to provide a fuel filter assembly which provides a mechanism by which a motorist can avoid being stranded and can navigate to a nearby service station even if the replaceable filter element becomes plugged and another element is not readily available.

These objectives are obtained by a disposable lid assembly for filtering fluid in accordance with claim 1.

It is a feature of a preferred embodiment of the present invention to provide a replaceable filter element and removable lid assembly which is discarded and replaced every time the filter element needs to be changed. In so doing, the removable lid is less prone to breakage and is less likely to be lost. Moreover, since the lid and element are discarded every time, the operator need not come in contact with the soiled filter element. Rather, the element and lid assembly can simply be discarded, and a new, clean, element and lid assembly can be installed.

In accordance with such a preferred embodiment of the present invention, it is a feature to provide the outer sealing gasket for such a fuel filter in a substantially fixed arrangement with the housing lid such that it is discarded and replaced every time the filter element and lid are replaced as well. In so doing, the operator need not come in contact with a soiled gasket and the gasket is not prone to being lost, damaged, or installed incorrectly.

It is another feature of a preferred embodiment of the present invention to rely on the leverage of the screw threads on the removable lid to pull the replaceable filter element away from the filter housing standpipe when unscrewing the lid to thereby reduce the total force required to remove the replaceable filter element from the housing. Since the replaceable filter element rotates with the removable lid, the leverage of the screw threads reduces the force required for removing the replaceable filter element from the standpipe.

It is a still further feature of a preferred embodiment of the present invention to provide the end cap of the replaceable filter element with a central open area and to seal the replaceable filter element against a central protruding hub of the removable lid such that various sensors, heaters, vents, and valves can be inserted through as lid into the center portion of the filter element.

It is a still further feature of a preferred embodiment of the present invention to manufacture the aforementioned replaceable filter element and lid assembly in an efficient and economical manner. Toward that end, the removable lid can be molded from two separate plastic pieces which are then ultrasonically welded together. The lid can be comprised of a planar cap portion as well as a plurality of downwardly depending and radially deformable fingers which substantially attach the filter element to the removable lid.

There is also provided a method for replacing a lid assembly of a fixed filter in accordance with claim 10.

These and other objectives and features of the invention will become more apparent from the following detailed description when taken in conjunction with the accompanying drawings.
Figure 1 is a side view of a preferred embodiment of the present invention;
Figure 2 is a sectional view of Figure 1;
Figure 3 is a cut-away perspective view of a preferred embodiment of the present invention installed in a conventional fuel filter having a standpipe;
Figure 4 is an enlarged side view of a preferred embodiment of the removable lid;
Figure 5 is a bottom view of Figure 4;
Figure 6 is a sectional view of Figure 5 taken along the line 6-6;
Figure 7 is a perspective view of the deformable finger hub prior to attachment to the removable lid;
Figure 8 is a top view of the replaceable filter element end cap;
Figure 9 is a sectional view of Figure 8 taken along the line 9-9;
Figure 10 is an enlarged sectional view of the nexus between the removable lid, cylindrical fuel filter housing, and outer sealing gasket attached to the removable lid;
Figure 11 is a sectional view of an alternative embodiment of the present invention;
Figure 12 is a perspective view of the replaceable filter element end cap used in conjunction with the alternative embodiment of Figure 11;
Figure 13 is a perspective sectional view of Figure 12;
Figure 14 is a perspective sectional view of the lid attached to the filter housing without a filter element installed; and
Figure 15 is sectional view of the entire filter housing having the present invention installed.

While the invention is susceptible of various modifications and alternative constructions, certain illustrative embodiments thereof have been shown in the drawings and will be described below in detail. It should be understood, however, that there is no intention to limit the invention to the specific forms disclosed, but, on the contrary, the intention is to cover all modifications, alternative constructions and equivalents falling within the spirit and scope of the invention as defined by the appended claims.

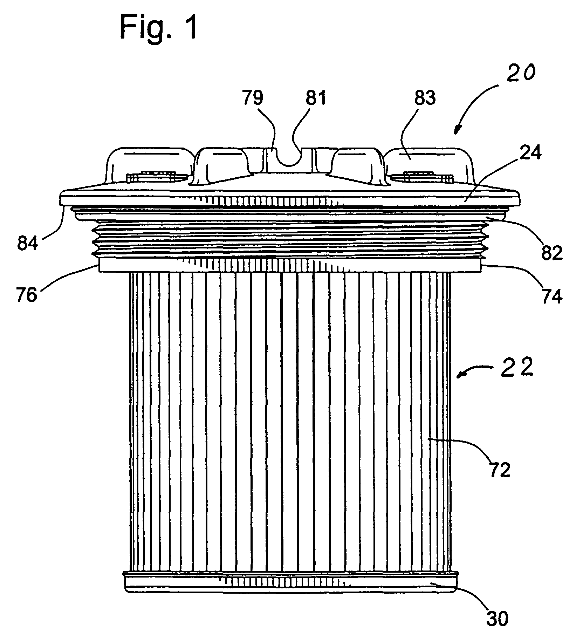

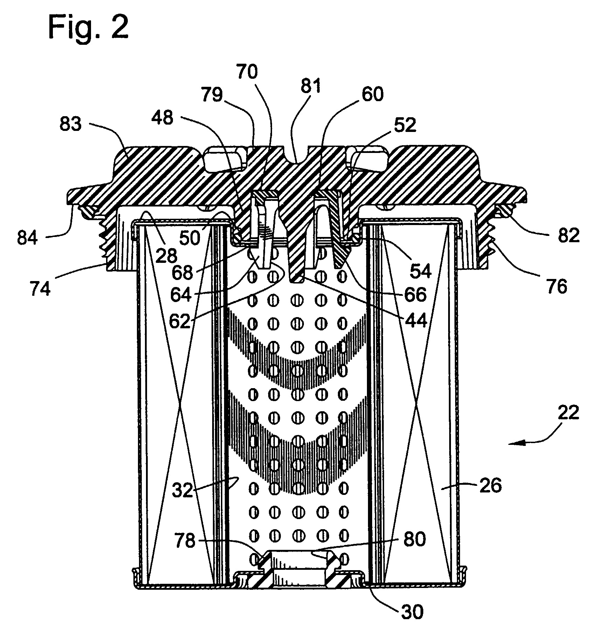

Referring now to the drawings and with specific reference to Figure 1, a preferred embodiment of the present invention is generally depicted as replaceable filter element and removable lid assembly 20. As shown therein, assembly 20 includes replaceable filter element 22 as well as lid 24. In the preferred embodiment, filter element 22 is substantially annular in shape and includes a ring of filter media 26 having first and second end caps 28 and 30 bonded thereto. As best shown in Figure 2, ring of filter media 26 defines a central cylindrical opening in which perforated core 32 is disposed. In the preferred embodiment of the present invention, filter media 26 is manufactured from paper whereas first and second end caps 28 and 30 are metal, although in alternative embodiments, other materials including plastics can be used.

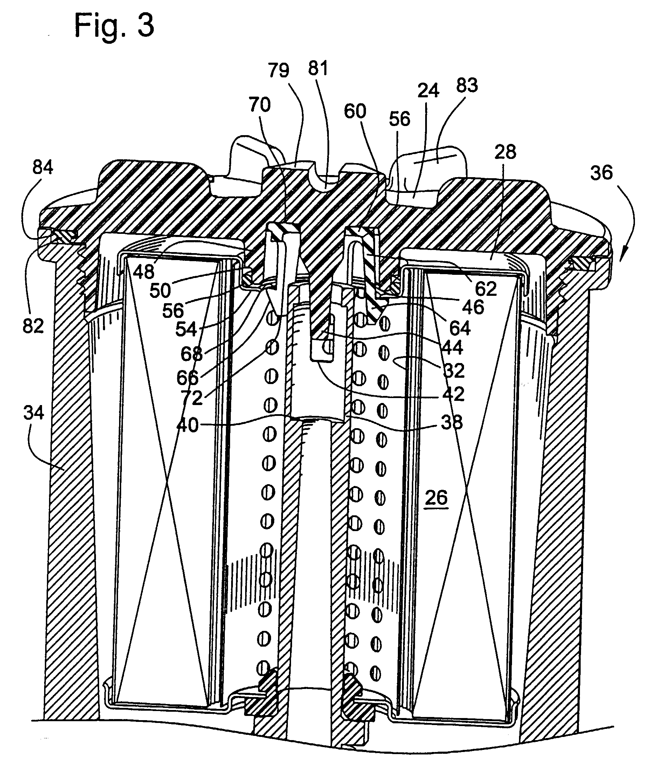

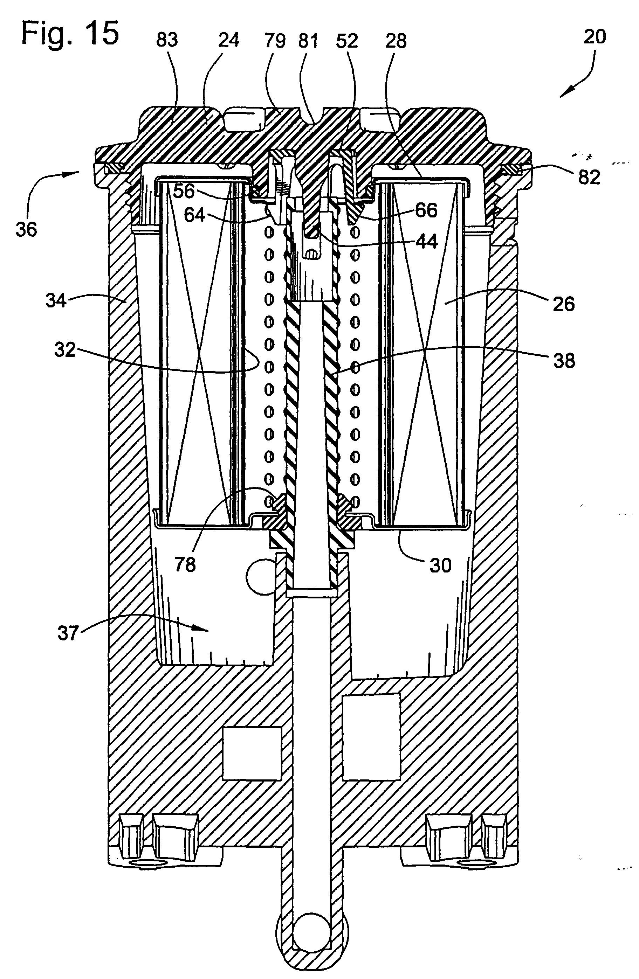

Turning now to Figure 3, assembly 20 is shown attached to fuel filter housing 34 having a substantially cylindrical side wall with open end 36 and a closed end 37 opposite thereto and shown in Figure 15. Standpipe 38 is centrally disposed within housing 34 and extends from the closed end. A valve member is adapted to be disposed within cavity 40 and is able to move linearly therein. The valve member is normally biased upwardly to close opening 42 but can be downwardly depressed to open the valve to allow fuel to exit the filter itself.

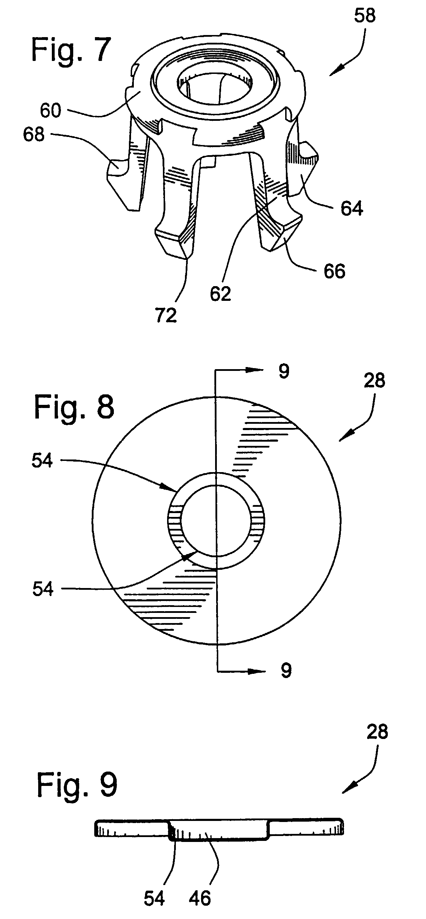

In the preferred embodiment of the present invention, it can be seen that the mechanism by which the valve is opened is provided in the form of projection 44 which is integrally molded to lid 24. Projection 44 is sufficiently long to extend through end cap 28, enter standpipe 38, and downwardly depress the valve member. To accommodate such interaction, it can be seen that in the preferred embodiment of the present invention, end cap 28 includes a central opening 46, as best shown in Figures 8 and 9. Not only does central opening 46 allow for the projection 44 to pass through, but in so doing, the end caps of filter element 22 are simple in design and can thus be manufactured relatively inexpensively.

In order to provide a seal between lid 24 and filter element 22, the preferred embodiment of the present invention includes central hub 48 comprised of a cylindrical wall with a stepped shoulder 50 about its lower periphery. Central hub 48 is sized to be received within central opening 46 of end cap 28 with bottom 52 of central hub 48 abutting radially inwardly directed plateau 54 of end cap 28. In so doing, stepped shoulder 50 defines an annular groove into which an elastomeric o-ring 56 is disposed for sealing purposes.

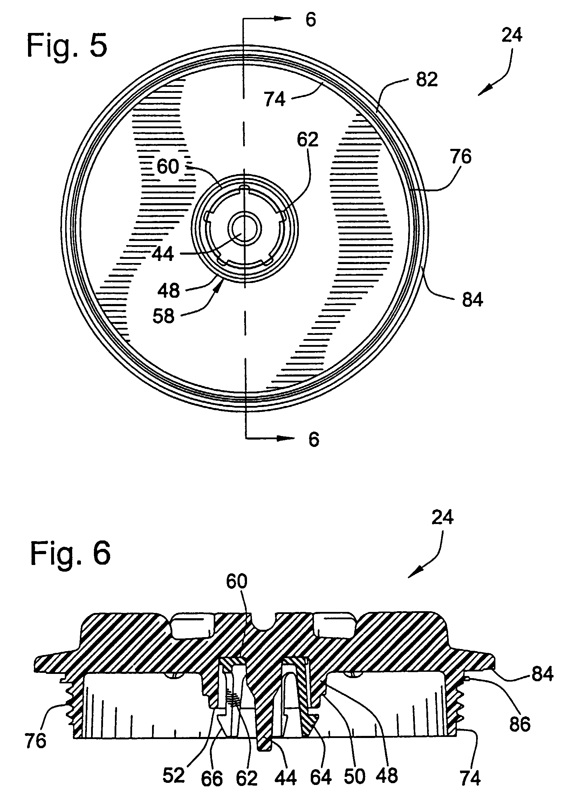

As best shown in Figures 5 and 6, lid 24 also includes deformable retention ring 58. More specifically, ring 58 includes circular base 60 from which a plurality of elastically deformable fingers 62 downwardly depend. Each finger 62 includes radially outwardly extending rib 64 having cam surface 66 and locking ledge 68, the importance and function of which will be described in further detail herein.

In the preferred embodiment of the present invention, Figures 3, 6 and 7 show that deformable ring 58 is separately molded from lid 24. Preferably, ring 58 is molded from the same plastic, such as glass filled nylon as lid 24. After the ring 58 and lid 24 are separately molded, they are preferably ultrasonically welded at 70 to form a complete unit. Alternatively, adhesive bonding, or other mechanisms, can be used for attaching ring 58 to lid 24. In still further embodiments, ring 58 and fingers 62 can be integrally molded with lid 24.

Referring again to Figures 2 and 3, the process by which assembly 20 is assembly will be discussed in detail. As disclosed earlier, lid 24 includes central hub 48 having o-ring receiving shoulder 50. In the preferred embodiment, once deformable ring 58 is ultrasonically welded to lid 24, elastomeric o-ring 56 is inserted over central hub and into stepped shoulder 50. Once o-ring 56 is in place, a separate filter element 22, having end caps 28 and 30 already adhesively attached thereto, is inserted over central hub and elastomeric o-ring 56. More specifically, central opening 46 of end cap 28 is directed toward projection 44. The apex 72 of each deformable finger 62 is dimensioned to be received within central opening 46 of end cap 28. As filter element 22 is further depressed toward lid 24, cam surfaces 66 engage plateau 54 which causes deformable fingers 62 to move radially inwardly. Fingers 62 continue to move radially inwardly until locking ledge 68 moves past plateau 54, at which time, the elastic properties of fingers 62 cause fingers 62 to spring radially outwardly past plateau 54. At such point, lid 24 cannot easily be removed from filter element 22 because plateau 54 is trapped between the locking ledges 68 of deformable fingers 62, and the bottom 52 of central hub 48. If it is necessary to remove filter element 22 from lid 24, special tooling can be inserted through second end cap 30 to inwardly depress deformable fingers 62 until locking ledges 68 can be moved past plateau 54. However, in the preferred embodiment of the present invention, it is not necessary to remove filter element 22 from lid 24, and in fact it is not desirable in that the present invention is directed toward an assembly 20 which can be entirely discarded when filter element 22 is filled with contaminants filtered from the fuel passing through the filter.

In other words, after a period of operation which causes filter element 22, and more specifically ring of filter media 26, to become filled or clogged with contaminants filtered from the fuel passing through an engine, the filter element 22 and lid 24 can be removed as assembly 20 for easy replacement purposes. Since the operator need not remove filter element 22 from lid 24, the operator is not subjected to a soiled mess, but rather a new, clean, assembly 20 can simply be reinstalled.

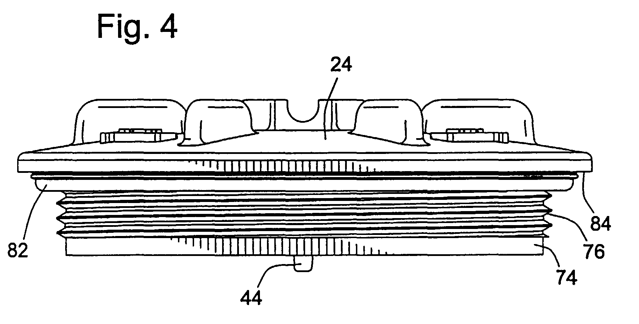

To facilitate removal of assembly 20, it can be seen from Figures 1 and 4 that lid 24 includes reduced diameter cylinder 74 having a plurality of threads 76. In a preferred embodiment of the present invention, threads 76 are made threads which are adapted to be received within the female threads of filter housing 34, although in alternative embodiments, different types of thread configurations or attachment mechanisms can be utilized. However, it is important to note that upon rotation of lid 24, the present invention utilizes the leverage generated by the rotation of lid 24 and the interaction of the threads to pull filter element 22 away from standpipe 38. The force required is increased due to elastomeric grommet 78 attached to second end cap 30. Grommet 78 includes central opening 80 which seals against standpipe 38. Lid 24 includes hexagonal nut 79 with tool receiving groove 81 to facilitate use of a conventional wrench or screwdriver in rotating lid 24. Lid 24 also includes fins 83.

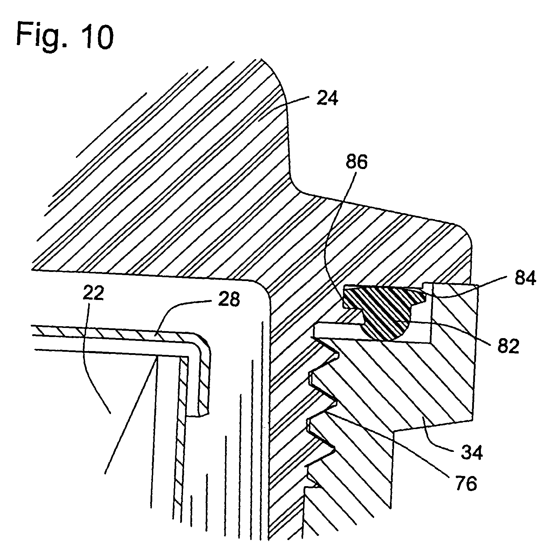

Not only do lid 24 and filter element 22 get discarded when changing assembly 20, but in the preferred embodiment of the present invention, outer sealing gasket 82 is discarded as well. As shown in Figures 4 and 10, gasket 82 is retained on reduced diameter cylinder 74 above threads 76 and below planar area 84. In the preferred embodiment of the present invention, sealing gasket 82 relies on its elastic properties and on angled ridge 86 to retain sealing gasket 82 to lid 24. In the preferred embodiment of the present invention, angled ridge 86 is disposed at approximately eighty degrees relative to planar area 84. Therefore, when assembly 20, including filter element 22 and lid 24 are rotated relative to housing 34 and the entire assembly 20 is removed from standpipe 38, sealing gasket 82 is retained by lid 24 to avoid the aforementioned problems associated with prior art devices. More specifically, with prior art devices, it had been found that such a sealing gasket could easily be lost or damaged during the replacement process, or be installed incorrectly. In addition, since the sealing gaskets in prior art devices are not attached to the lid or the housing, the operator necessarily has to reorient the gasket every time the filter element is removed and replaced. Since the gasket is oily and soiled, this causes another opportunity for the operator to be confronted with a mess.

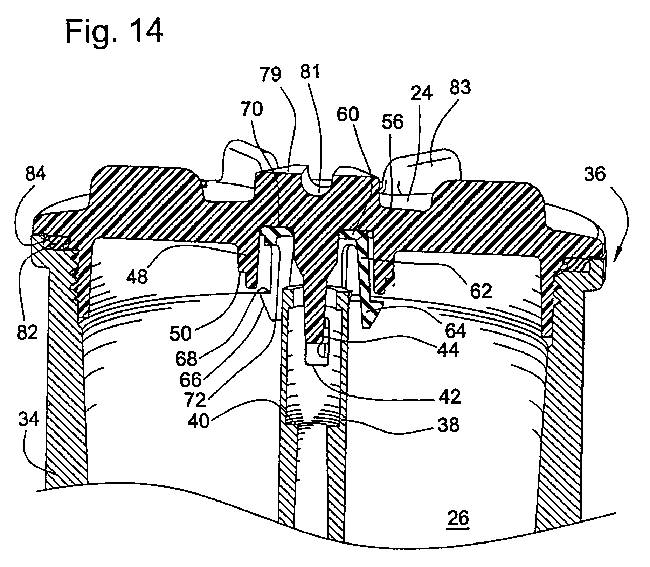

While Figure 3 does depict the present invention as assembly 20 installed within housing 34, it is to be understood that since projection 44 is part of lid 24, the fuel filter and thus the internal combustion engine can be operable without filter element 22. In other words, as shown in Figure 14, if lid 24 were to be attached to filter housing 34 without a filter element 22 being attached to lid 24, projection 44 would still be able to enter standpipe 38 and operate the valve held therein. While this would subject the engine to operation without filtered fuel, it would prevent the motorist from being stranded should the filter element become plugged without a replacement element being readily available. Such is not possible with prior art devices which rely on the projection being part of the fuel filter element end cap to operate the valve. If such a prior art filter element were to become plugged, and a replacement element were not to be readily available, the fuel filter and the engine would not be operable, thus subjecting the motorist to downtime until such time that a replacement element can be obtained.

The present invention also endeavors to provide a filter element having a central open area defined by core 32, with the filter element 22 being sealed against central hub 48 of lid 24. In so doing, various types of sensors, heaters, valves, vents, and the like, can be inserted through the central portion of lid 24 to the center portion of the filter element for various purposes. Such features are not available with known prior art devices.

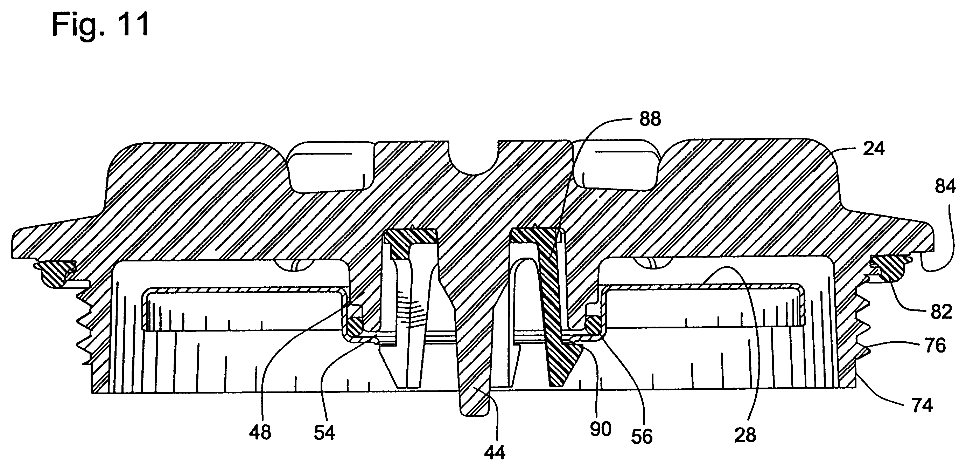

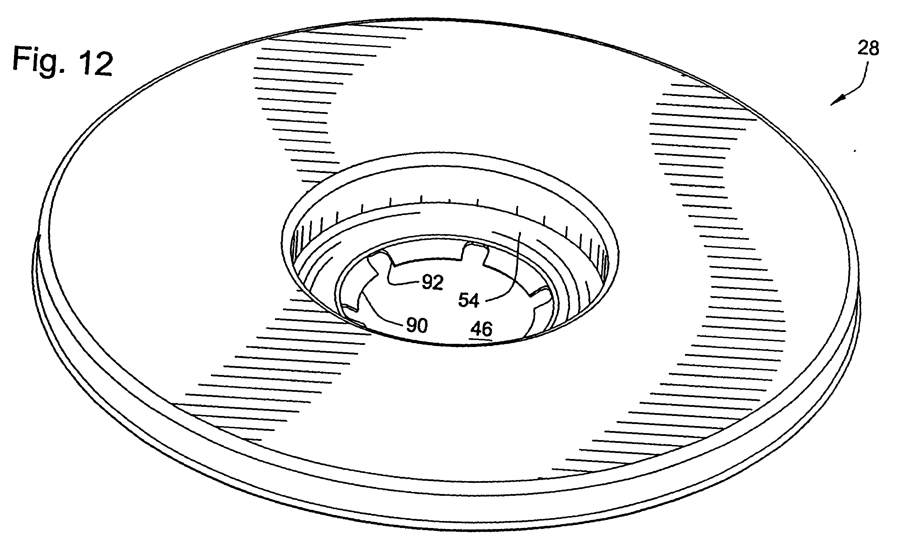

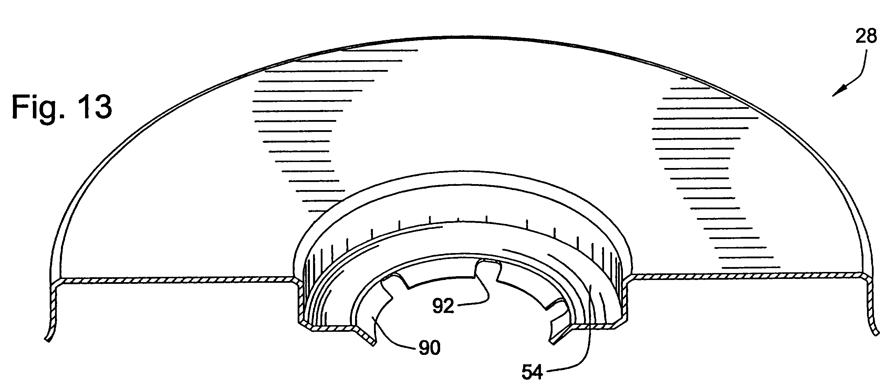

Figures 11-13 depict an alternative embodiment of the present invention. As shown best in Figure 11, lid 24 of the alternative embodiment does not include deformable ring 58, but rather includes inner hub 88. Inner hub is substantially cylindrical in shape and is sufficiently long to extend past plateau 54 of end cap 28. This is of importance in that end cap 28, specifically plateau 54, further includes gripping tabs 90 which serve to hold lid 24 to replaceable filter element 22. More specifically, as shown in Figures 12 and 13, tabs 90 are angled downwardly with respect to plateau 54 and are separated by gaps 92 to facilitate insertion of inner hub 88 into central opening 46. Upon force being directed to pull lid 24 away from end cap 28, gripping tabs 90 dig into inner hub 88 to resist such separation. In the preferred embodiment of the present invention, tabs 90 are manufactured from steel and inner hub 80 is manufactured from plastic to facilitate the gripping action. Moreover, inner hub 88 is slightly frusto-conical in shape to assist the insertion process.

With the alternative embodiment, it can be seen that inner hub 88 can be integrally molded with lid 24 to thereby result in relatively low manufacturing costs. In other words, a separate mold for deformable ring 58 is eliminated, as it is the ultrasonic welding or other adhesion process associated therewith. The remainder of assembly 20 of the alternative embodiment is the same as the preferred embodiment depicted above.

From the foregoing, it can therefore be seen that the present invention provides a new and improved replaceable fuel filter element and removable lid assembly for use in conjunction with a fuel filter of the type having a centrally disposed standpipe and valve structure. Since the replaceable filter element and lid form a complete assembly, every time the element is filled or plugged, the entire assembly can be removed from the filter housing, discarded, and replaced with a new assembly. The operator is not subjected to a messy process of removing the assembly from the lid as is the case with prior art devices. Moreover, since a new lid is provided with each filter assembly, the lid itself will not be lost or subjected to breakage which can often result in substantial downtime with prior art devices where the lid is reusable and the filter element is replaced every time. Moreover, since the outer sealing gasket is affixed to the lid of the assembly, it is discarded every time the assembly is discarded and the operator need not be concerned with losing the sealing gasket, damaging the sealing gasket, or installing the gasket incorrectly. Again, since the gasket is affixed to the ring, it will not be necessary for the operator to come in contact with a soiled gasket when replacing the filter element. As an added emergency feature, in the event that a filter element should become plugged, and a replacement filter element should prove not to be readily available, the present invention allows a conventional fuel filter to be operable in that the standpipe valve actuation projection is part of the removable lid and not the filter element itself. Furthermore, through the efficient design of the present invention, the components of the present invention can be separately molded and ultrasonically welded together to form a complete lid unit which can then be physically attached to a conventional filter element having first and second annular end caps. Complicated structures associated with the end caps are thereby avoided resulting in a reduced expense and quicker production time.

As an even further simplification of the means for attaching the filtering element to the housing lid, the sheet steel element end cap and integral gripping tabs can be formed in the same stamping operation. This achieves even greater manufacturing efficiencies by eliminating the need for the separately molded deformable ring and the subsequent ultrasonic weld or adhesive bond formation.

## Claims

1. A disposable lid assembly (20) for filtering fluid comprising:
a disposable lid (24) having a plate portion and a generally cylindrical rim portion, the rim portion projecting downwardly from the plate portion about a central axis, the rim portion having threading (76) on its outer periphery, the plate portion having top and bottom surfaces, the bottom surface including an axially projecting valve operating projection (44) aligned with the central axis and at least one connecting projection offset from the central axis;
a first ring gasket (82) carried by the lid concentrically around the cylindrical rim portion;
a filter element (22) comprising a tubular ring of filter media (26), and top and bottom ring shaped end caps (28, 30), opposing ends of the filter media (26) being attached to the top and bottom end caps (28, 30) with a central hole extending through the end caps and the filter media (26), the projection (44) extending into the hole through the top end cap (28);
a second ring gasket (56) disposed between the bottom surface of the lid (24) and the top end cap (28) to form a seal; and
the at least one connecting projection engaging the inner periphery of the top end cap (28) to substantially permanently connect the lid (24) and filter element (22) such that the lid and filter element (22) are installed and typically disposed of as a single unit.

2. A disposable lid assembly in accordance with claim 1, characterized in that the at least one connecting projection comprises a resilient ring (58) of fingers (62), the ring (58) of fingers (62) integrally formed with the lid (24) and extending axially from the bottom surface of the plate portion, each finger having a rib (64) extending radially outward, each finger (62) extending into the central hole and each rib (64) engaging the inner periphery of the top endcap (28).

3. A disposable lid assembly in accordance with claim 2, characterized in that the ring of fingers (62) further comprises a base (60) integrally attached to the bottom surface of the plate portion, each finger (62) extending axially from the base.

4. A disposable lid assembly in accordance with anyone of claims 2 or 3, characterized in that each rib (64) has an upwardly disposed generally radially planar locking surface (68) for engaging the inner periphery of the top endcap (28), and an angled cam surface (66) angling radially inward and downward away from the locking surface (68) for deforming the fingers (62) radially inward to facilitate connection between the lid (24) and filter element (22).

5. A disposable lid assembly in accordance with claim 1, characterized in that the at least one connecting projection comprises a hollow inner hub (88) extending axially from the bottom surface of the plate portion, the inner hub (88) concentrically surrounding the valve operating projection (44), the inner periphery of the top endcap (28) including gripping teeth (90) extending radially inward and engaging the inner hub.

6. A disposable lid assembly in accordance with claim 5, characterized in that the inner hub (88) is frusto-conical in shape.

7. A disposable lid assembly in accordance with anyone of claim 5 or 6, characterized in that the gripping teeth (90) are angled downward away from the lid (24) for increased strength of the connection between the lid (24) and the filter element (22).

8. A disposable lid assembly in accordance with anyone of claims 1 to 7, characterized in that the at least one connecting projection is located radially inside the second ring gasket (56).

9. A disposable lid assembly in accordance with anyone of claims 1 to 8, characterized in that the disposable lid assembly (20) is adapted to be threadably attached to a filter housing (34) about the central axis via the threaded cylindrical rim portion, the filter housing (34) having a generally cylindrical sidewall between an open end (36) and a closed end (37) and a standpipe (38) extending axially from the closed end (37) towards the open end (36) having a valve member proximate the open end, the first ring gasket (82) creating a first seal between the lid (24) and the filter housing (34), the second ring gasket (56) creating a second seal between the lid (24) and the top endcap (28).

10. A method for replacing an old lid assembly (20) of a fuel filter assembly in the engine of a vehicle and operating a new lid assembly (20), the filter assembly comprising a filter housing (34) having a generally cylindrical sidewall between an open end (36) and a closed end (37), a standpipe (38) extending axially from the closed end (37) towards the open end (36) having a valve member proximate the open end, the old lid assembly being secured to the fuel filter assembly for removal of contaminants from fuel, the method comprising:
removing the old lid assembly (20) for disposal;
providing a new lid assembly (20) comprising a lid (24), a tubular filter element (22) and two ring seals, the lid (24) having a projection (44) extending from the lid for operation of the valve member, the first ring seal (82) disposed between the lid (24) and the filter housing (34), the second ring seal (56) disposed between the lid (24) and the filter element (22), the filter element (22) being substantially permanently attached to the lid (24) such that the lid (24) and filter element (22) are installed and typically disposed of in a single unit;
installing the new lid assembly (20) to the filter housing;
detecting a condition when the filter element (22) of the new lid assembly (20) is clogged;
removing the new lid assembly (20) from the filter housing;
detaching the filter element (22) from the new lid assembly (20); and
re-installing the lid (24) of the new lid assembly (20), without the filter element (22), to the filter housing.
